# EUROPÄISCHE PATENTSCHRIFT

(11) **EP 2 078 695 B1**
(45) Veröffentlichungstag und Bekanntmachung des Hinweises auf die Patenterteilung: **23.05.2012**
(21) Anmeldenummer: 09150271.6
(22) Anmeldetag: 09.01.2009
(51) Int. Cl.: C01B 33/035

(54) **Verfahren zur Abscheidung von polykristallinem Silicium**
Process for depositing polycrystalline silicon
Procédé et appareil pour séparer un produit gazeux d'un flux d'alimentation comprenant des contaminants

(30) Priorität: 14.01.2008 DE 102008000052
(43) Veröffentlichungstag der Anmeldung: 15.07.2009
(73) Patentinhaber: Wacker Chemie AG, 81737 München (DE)
(72) Erfinder: Hesse, Karl, 84489 Burghausen (DE); Schreieder, Franz, 84367 Tann (DE)
(74) Vertreter: Fritz, Helmut

(56) Entgegenhaltungen:
- EP-A- 1 264 798
- WO-A-2005/085133
- WO-A-2008/027101
- DE-A1- 2 918 066
- RU-A- 2004 124 874

## Beschreibung

Die Erfindung betrifft ein Verfahren zur Abscheidung von polykristallinem Silicium.

Wird polykristallines Silicium durch chemische Gasphasenabscheidung von chlorierten Silanen, wie z.B. Trichlorsilan oder Dichlorsilan, hergestellt, indem man die Gase an glühenden Siliciumoberflächen, wie z. B. Stäben (Siemensverfahren) oder Granulatpartikeln (Wirbelschichtverfahren) zersetzt, so scheidet sich in der Primärreaktion Silicium auf den heißen Oberflächen ab und es bildet sich als Nebenprodukt Tetrachlorsilan. Die Abscheidung von polykristallinem Silicium aus Trichlorsilan beruht auf thermischen Gleichgewichtsprozessen von Chlorsilanen. So finden beispielsweise bei der Trichlorsilanabscheidung je nach Reaktionsbedingungen die Hauptreaktionen:

4 SiHCl₃ ------> 3 SiCl₄ + Si + 2 H₂

oder

4 SiHCl₃ + 2 H₂ ---> 3 Si + SiCl₄ + 8 HCl

statt.

In den aus dem Abgas als Flüssigkeit kondensierbaren Chlorsilanverbindungen (= "Abgaskondensat") der Si-Abscheidereaktoren finden sich neben Dichlorsilan, Trichlorsilan und Siliciumtetrachlorid je nach Abscheidebedingungen von 0,001 - 3 Gew.% hochsiedendende Chlorsilane, im folgenden auch Hochsieder genannt, die in Nebenreaktionen gebildet werden. Hochsiedende Chlorsilane sind Verbindungen, welche aus Silicium, Chlor, ggf. Wasserstoff, Sauerstoff und Kohlenstoff bestehen und einen höheren Siedepunkt als Tetrachlorsilan (57°C/bei 1013 hPa) aufweisen. Bevorzugt handelt es sich um Disilane der Formel HₙCl₆₋ₙSi₂ (n= 0 - 6), Oligo (chlor) silane der Formel H₂ₙ₋ₘClₘSiₙ (n= 2 bis ∞, vorzugsweise 2 bis 4 und m= 0 bis 2n), Disiloxane der Formel HₙCl₆₋ₙSi₂O (n= 0 - 4), Siloxane der Formel H₃Si-[O-SiR₂]ₙ-O-SiH₃ (n = 1 bis 4, vorzugsweise 1 oder 2; R ist unabhängig voneinander H, Cl oder CH₂) und zyklische Oligosiloxane der Formel 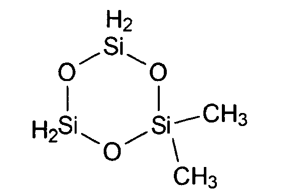 sowie deren Methylderivate.
In einer typischen Zusammensetzung bestehen diese hochsiedenden Chlorsilane aus etwa 50 Gew.% Si₂Cl₆, > 34 Gew.% Si₂HCl₅, 10 Gew.% Si₂H₂Cl₄ (2 Isomere), 5 Gew%. Si₂H₃Cl₃ (2 Isomere) und < 1 Gew.% noch höher siedenden Chlorsilankomponenten.

Für die Aufarbeitung der Abgase aus der Polysiliciumabscheidung sind verschiedene Verfahren bekannt: DE2918066 beschreibt ein Verfahren, in dem alle im Kondensat der Polysiliciumabscheidung anfallenden Chlorsilane wieder dem Eduktgas der Abscheidung zugeführt werden. Gravierender Nachteil dieses Verfahrens ist die nur äußerst geringe Abscheiderate an Silicium, die durch die sich im Gleichgewicht ergebende hohe Konzentration an Tetrachlorsilan im Eduktgas verursacht wird, die den Abscheideprozess unwirtschaftlich macht (vgl. W.C. O'Mara, R.B. Herring, L.P. Hunt, Handbook of Semiconductor Silicon Technology, ISBN 0-8155-1237-6, S. 77, 1990).

In kommerziell verwendeten, so genannten Siemens-Verfahren zur Herstellung von stabförmigem, polykristallinem Silicium mittels Trichlorsilan-Abscheidung ist es daher üblich, aus dem Abgas nur Chlorsilane mit einem Siedepunkt niedriger als der Siedepunkt von Trichlorsilan zusammen mit dem nicht reagierten Trichlorsilan wieder dem Siemens-Abscheidereaktor zur Herstellung von polykristallinem Silicium zuzuführen. Das anfallende Tetrachlorsilan wird dabei aus dem Abgasstrom destillativ entfernt und entweder zu Trichlorsilan konvertiert (Motorola, US 3,933,985) oder als Ausgangsstoff für andere chemische Produkte, wie z. B. pyrogene Kieselsäure oder Tetraethylsilikat verwendet (vgl. Handbook of Semiconductor Silicon Technology, ISBN 0-8155-1237-6, S. 72, 1990). Die ebenfalls anfallenden Hochsieder werden entweder entsorgt (z.B. US 4,252,780) oder zu Monomeren umgewandelt. Dies geschieht entweder durch Umsetzung zusammen mit Tetrachlorsilan und Wasserstoff oder durch cracken mit HCl (Osaka Titanium, JP Hei 1-188414; Tokuyama, JP H09-263405; Union Carbide, US 4,340,574; Hemlock, WO 02/100776 A1).

Es ist ferner bekannt, aus den Abgasen der Abscheidung von polykristallinem Silicium hochreines Hexachlordisilan (H₂Si₂Cl₆) zu isolieren (WO 2002012122). Die Isolierung dieser Hochsiederfraktion als Ausgangsprodukt für spezielle Epitaxieanwendungen oder zur Herstellung von Siliciumpolymeren ist allerdings sehr aufwendig.

Alle derartigen Verfahren zur Aufarbeitung von Hochsiedern, sind mit Ausbeuteverlusten insbesondere an Chlor und Silicium, einer Umweltbelastung durch Hydrolyseprodukte, oder aufwändigen Anlagen und Prozessen verbunden. Ferner geht bei den beschriebenen Recyclingverfahren zu Monomeren die im Kondensat vorliegende Halbleiter-Reinheit der Verbindungen verloren. Diese muss erst mittels aufwändiger Reinigungsschritte, bevorzugt durch Destillation, wiederhergestellt werden, ehe die Produkte wieder im Abscheideverfahren eingesetzt werden können.

Eine Möglichkeit zur wirtschaftlichen Verwertung der Hochsieder beschreibt DE 102006009953. Diese werden zur Herstellung von pyrogener Kieselsäure verwendet. Nachteil hier ist, dass man neben der Herstellung Polysilicium auch die Herstellung von pyrogener Kieselsäure betreiben muss, was eine nicht immer wünschenswerte Koppelung dieser unterschiedlichen Produkte bedeutet.

Aufgabe der Erfindung ist es, ein kostengünstiges Verfahren zur Verfügung zu stellen, welches die Wiederverwertung von Hochsiedern aus der Abscheidung von polykristallinem Silicium ermöglicht.

Diese Aufgabe wird gelöst durch ein Verfahren, bei dem polykristallines Silicium dadurch hergestellt wird, dass ein Reaktionsgas enthaltend Wasserstoff und ein siliciumhaltiges Gas in einen Reaktionsraum eingebracht wird und das siliciumhaltige Gas an erhitztem Silicium thermisch zersetzt und auf dem Silicium abgeschieden wird, wobei ein Abgas entsteht und dieses Abgas in eine erste Abgasfraktion umfassend Trichlorsilan und niedriger als Trichlorsilan siedende Chlorsilane und eine zweite Abgasfraktion umfassend höher als Trichlorsilan siedende Komponenten aufgetrennt wird und die erste Abgasfraktion dem Reaktionsgas einer Abscheidung von polykristallinem Silicium zugeführt wird und die zweite Abgasfraktion in Tetrachlorsilan und eine Hochsiederfraktion bestehend aus Hochsiedern und ggf. Tetrachlorsilan aufgetrennt wird, dadurch gekennzeichnet, dass die Hochsiederfraktion dem Reaktionsgas einer Siliciumabscheidung zugeführt wird und das Reaktionsgas auf eine Temperatur erhitzt wird, die sicherstellt, dass die Hochsiederfraktion bei Eintritt in den Reaktionsraum des Abscheidereaktors gasförmig vorliegt.

Überraschenderweise zeigte sich, dass die hochsiedenden Komponenten in Abscheidereaktoren effizient abreagieren und sich nicht zu den für die jeweiligen Abscheidereaktoren und deren Abscheideprozessen typischen Hochsiederkonzentrationen im Abgas aufaddieren.

Das erfindungsgemäße Verfahren ermöglicht eine direkte Wiederverwertung der Hochsieder aus der Polysiliciumabscheidung in der Polysiliciumabscheidung. Dabei werden die Hochsieder wertschöpfend zu Silicium oder monomeren Chlorsilanen umgewandelt. Es ermöglicht somit erstmals auch Abscheideverfahren für polykristallines Silicium, bei denen große Mengen an Hochsiedern im Abgas anfallen, wirtschaftlich und umweltfreundlich zu betreiben.

Es verringert zudem Verluste an Silicium und Chlor bei der Herstellung von polykristallinem Silicium. Ferner vermeidet es Trenn- und Aufreinigungsschritte bei der Aufarbeitung des Abgases aus der Polysiliciumabscheidung. Eine gemäß dem Stand der Technik erforderliche separate chemische Umwandlung (wie Dismutieren, Cracken oder Hydrieren) oder die kostenträchtige Entsorgung dieser Abgaskomponenten wird vermieden.

In einer bevorzugten Verfahrensvariante wird die Hochsiederfraktion bereits vor der Zuführung zum Reaktionsgas auf eine Temperatur erhitzt, bei der die Hochsiederfraktion gasförmig vorliegt.

Bei dem Reaktionsraum handelt es sich entweder um den Reaktionsraum eines Siemensreaktors oder den Reaktionsraum eines Wirbelschichtreaktors. Entsprechende Abscheideverfahren ohne erfindungsgemäße Abgasrückführung sind beispielsweise aus US 3933985 oder WO 02/100776 A1 bekannt.

Vorzugsweise weisen die Siliciumstäbe in einem Siemensreaktor bei der Umsetzung der hochsiederhaltigen Reaktionsgase eine Temperatur von 900 bis 1413°C, besonders bevorzugt von 1100 bis 1413°C auf.

Vorzugsweise weisen die Granulatpartikel in einem Wirbelbettreaktor bei der Umsetzung der hochsiederhaltigen Reaktionsgase eine Temperatur von 800 bis 1400°C, besonders bevorzugt von 950 bis 1050°C auf.

Vorzugsweise wird das hochsiederhaltige Reaktionsgas im erfindungsgemäßen Verfahren auf eine Temperatur von 300 bis 590°C bei einem Druck von 1 bis 8 bar absolut erhitzt, wobei es erfindungswesentlich ist, dass eine vollständige Verdampfung der hochsiedenden Komponenten gewährleistet ist.

Die Hochsiederfraktion enthält aus praktischen Gründen vorzugsweise Tetrachlorsilan in einer Menge, die die Fließfähigkeit der Hochsiederfraktion, die ohne Tetrachlorsilangehalt wegen der hohen Viskosität schwer förderbar ist, sicherstellt. Vorzugsweise liegt der Tetrachlorsilangehalt dabei unter 50 Gew.%. Mit entsprechendem technischem Aufwand ließe sich aber auch eine zu 100 % aus Hochsiedern bestehende Hochsiederfraktion verwenden.

Falls ein Anteil von > 5 Gew.% an extrem schwersiedenden Komponenten (Verbindungen mit Siedepunkten über 300°C) in der Hochsiederfraktion vorliegt, ist es bevorzugt, diese Komponenten vorzugsweise destillativ aus der Hochsiederfraktion zu entfernen. Dies kann zum Beispiel über einen Sumpfabzug an der Destillationskolonne geschehen, wobei die in dem erfindungsgemäßen Verfahren einzusetzende Hochsiederfraktion an einem Seitenabzug der Destillationskolonne entnommen wird.

Die Chlorsilanzusammensetzung im hochsiederhaltigen Reaktionsgas ist vorzugsweise wie folgt: 0 - 10 Gew.% Dichlorsilan, 90 - 99,9 Gew.% Trichlorsilan, 0 - 5 Gew.% Tetrachlorsilan, 0,01 - 5 Gew.% Hochsieder.

Die Chlorsilanzusammensetzung im hochsiederhaltigen Reaktionsgas ist besonders bevorzugt wie folgt: 0 - 10 Gew% Dichlorsilan, 90 - 99,9 Gew% Trichlorsilan, 0 - 0,5 Gew% Tetrachlorsilan, 0,01 - 0,5 Gew% Hochsieder. Die Hauptkomponente der Hochsieder (d.h. in der Summe mehr als 90 Gew% der Hochsieder) sind in beiden Fällen Si₂Cl₆, HSi₂Cl₅ und H₂Si₂Cl₄.

Die Erfindung betrifft auch die Verwendung eines Reaktionsgases bestehend aus Wasserstoff und einer der vorgenannten Chlorsilanzusammensetzungen zur Herstellung von polykristallinem Silicium in einem Siemens Reaktor oder einem Wirbelschichtreaktor.

Das von der höher als Trichlorsilan siedenden Fraktion abgetrennte Tetrachlorsilan kann z.B. einer Hochtemperaturkonvertierung, wie sie aus US 3,933,985 bekannt ist, zugeführt werden.

Vorzugsweise werden die Abgase mehrerer Abscheideanlagen miteinander vereinigt und nach dem Auftrennen die Hochsiederfraktion dem Reaktionsgas für einen oder mehrere Siemensreaktoren oder einen oder mehrere Wirbelschichtreaktoren zugeführt.

Besonders bevorzugt wird die Hochsiederfraktion aus den bei der Abscheidung mittels Siemensverfahren anfallenden Abgasen dem Reaktionsgas einer trichlorsilanbasierten Wirbelschicht-Polysiliciumabscheidung zugeführt.

Bei den Untersuchungen, die zur vorliegenden Erfindung führten, zeigte sich überraschend, dass sich bei der Rückführung der bei der Abscheidung im Siemensprozess anfallenden Hochsiedermengen in dieselben Abscheidereaktoren eine nur unwesentlich höhere Gleichgewichtskonzentration an Hochsiedern im Abgas dieser Abscheidereaktoren einstellt, ohne dass das Abscheideergebnis, d.h. die Qualität und Ausbringung der Polysilicium-Stäbe, negativ beeinflusst wird. So kommt es beispielsweise in einem konventionellen Siemensreaktor zu einem Anstieg der Hochsiederkonzentration im Abgaskondensat von 0,35 Gew% auf 0,37 Gew%.

Bei der Zugabe dieser Abgasfraktion zum Reaktionsgas einer trichlorsilanbasierten Siliciumgranulatabscheidung in der Wirbelschicht, zeigte sich, dass dem Reaktionsgas Hochsieder bis zu 3 Gew.% aus dem Abgaskondensat der Abscheidung im Siemensprozess zugegeben werden können, ohne dass eine messbare Hochsiederkonzentration (> 0,01 Gew.%) im Abgas der Wirbelschicht beobachtbar ist und ohne dass das Abscheideergebnis sich verschlechtert. Vorzugsweise werden dem Reaktionsgas deshalb bis zu 5 Gew.%, vorzugsweise 0,01 bis 3 Gew.% an Hochsiedern zugeführt.

Nachdem bei der trichlorsilanbasierten Siliciumgranulatabscheidung in der Wirbelschicht unter den üblichen Abscheidebedingungen praktisch keine Hochsieder im Kondensat gemessen werden, ermöglicht eine Verfahrenskombination, bei der die Hochsiederfraktion der Abgase, die bei der Herstellung von polykristallinem Silicium mittels Siemensabscheidung anfallen, dem Reaktionsgas einer Wirbelschichtabscheidung zur Herstellung von polykristallinem Silicium zugemischt werden, eine vollständige Verwertung der Hochsieder aus der Siemensabscheidung in einem Verfahren. Diese Verfahrensvariante ist erfindungsgemäß daher besonders bevorzugt.

Die Verfahrensbedingungen, bei denen die Abscheideverfahren durchgeführt werden, entsprechen den bei diesen Abscheideverfahren üblichen Parametern.

Das erfindungsgemäße Verfahren ermöglicht somit auch eine Nutzung von Stababscheidereaktoren, deren Abscheideverhalten z. B. durch strömungsbeeinflussende gekühlte Einbauteile optimiert wurde, die aber bisher nicht wirtschaftlich zu nutzen waren, weil sie nachteiligerweise einen Mehranfall an Hochsiedern im Abgas aufwiesen. Die Hochsiederfraktionen der Abgase dieser Reaktoren lassen sich entsorgen durch eine Zugabe zum Reaktionsgas in Reaktoren, die einen geringen Hochsiederanfall haben.

Die Erfindung betrifft somit auch ein Verfahren, das dadurch gekennzeichnet ist, dass das Hochsiederkondensat einer Abscheidung mit hohem Hochsiederanfall dem Reaktionsgas einer Abscheidung mit niedrigem Hochsiederanfall zugeführt wird.

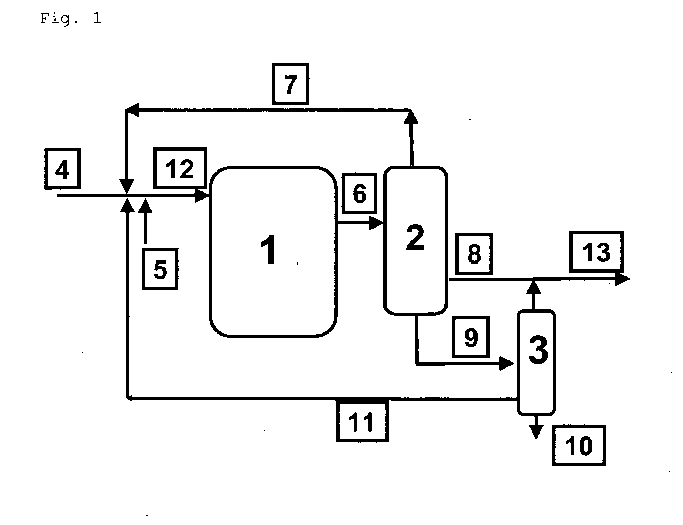

Fig. 1 zeigt schematisch eine Variante des erfindungsgemäßen Verfahrens, bei der die Rückführung der Hochsiederfraktion aus einem Siemensreaktor zur Erzeugung von Polysiliciumstäben in denselben Reaktor erfolgt (siehe auch Bsp. 1). In einer derartigen Verfahrensvariante werden vorzugsweise 0,01 bis 0,5 Gew.% Hochsieder dem Reaktionsgas zugesetzt, das Reaktionsgas wird auf 300 bis 590 °C erhitzt und die Abscheidung erfolgt bei einer Temperatur der Siliciumstäbe 1100 bis 1413°C.

Die Bezugszeichen bedeuten:
1: Reaktor zur Abscheidung von Siliciumstäben
2: Destillation des Chlorsilankondensates aus dem Reaktorabgas
3: Destillation des Hochsieder/Tetrachlorsilangemisches aus der Destillation 2
4: Trichlorsilanfeed für den Abscheidereaktor
5: Wasserstofffeed für den Abscheidereaktor
6: Abgaskondensat des Abscheidereaktors
7: "Niedersiederfraktion" aus der Destillation 2, bestehend aus Trichlorsilan und niedriger siedenden Chlorsilankomponenten wie Dichlorsilan und Monochlorsilan
8: Optionaler Seitenabzug aus der Destillation 2, bestehend aus Tetrachlorsilan
9: "Hochsiederfraktion" aus der Destillation 2, bestehend aus Tetrachlorsilan und höher siedenden Chlorsilankomponenten ("Hochsiedern")
10: Optionale Ausschleusung von hochsiedenden Chlorsilankomponenten mit einem Siedepunkt größer als 300°C
11: "Hochsiederfraktion" zur Rückführung in die Abscheidung, bestehend aus einem optionalen Anteil an Tetrachlorsilan und höher siedenden Chlorsilankomponenten
12: Reaktionsgas für den Abscheiderektor mit vollständig verdampften Chlorsilankomponenten, inklusive "Hochsiedern".
13: Tetrachlorsilan aus der Destillation 3 mit optionalem Anteil aus Destillation 2. Das Produkt wird entweder aus dem Stoffverbund ausgeschleust oder kann nach Konvertierung zu Trichlorsilan wieder der Abscheidung zugeführt werden

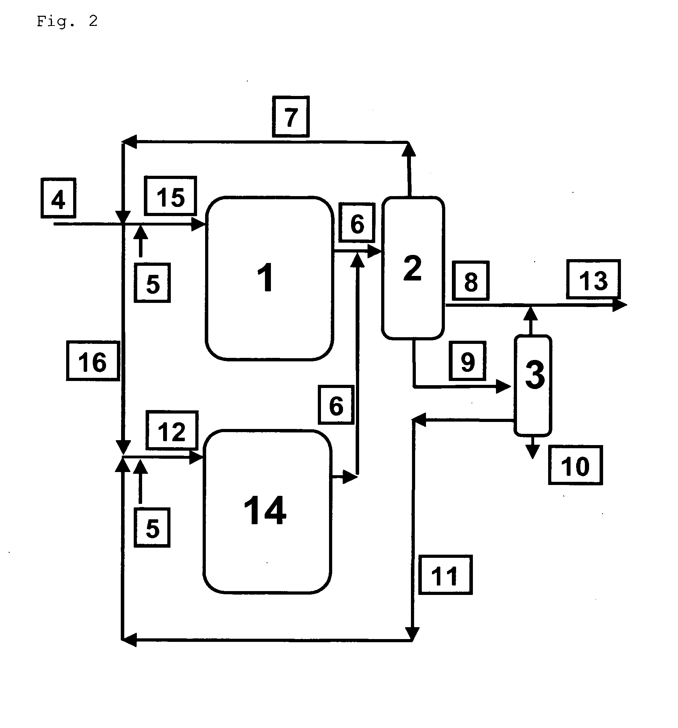

Fig. 2 zeigt schematisch eine Variante des erfindungsgemäßen Verfahrens, bei der die Rückführung der Hochsiederfraktion aus den Abgasen eines Siemensreaktors zur Erzeugung von Polysiliciumstäben mit einem hohen Anfall an Hochsiedern in einen Siemensreaktor zur Erzeugung von Poysiliciumstäben mit einem niedrigen Anfall an Hochsiedern erfolgt. In einer derartigen Verfahrensvariante werden vorzugsweise 0,01 bis 5 Gew.% Hochsieder dem Reaktionsgas zugesetzt, das Reaktionsgas wird auf 300 bis 590°C erhitzt und die Abscheidung erfolgt bei einer Temperatur der Siliciumstäbe 1100 bis 1413°C.
Die Bezugszeichen, soweit nicht identisch mit Fig. 1, bedeuten:
14: Reaktor zur Abscheidung von Siliciumstäben, wobei der in diesem Reaktor entstehende Hochsiederanteil geringer ist als in Reaktor 1
15: Reaktionsgas für den Abscheidereaktor 1, ohne beigemischter Hochsiederfraktion
16: Chlorsilanfeed, bestehend aus einer Mischung aus Trichlorsilan (4) und Niedersiederfraktion (7)

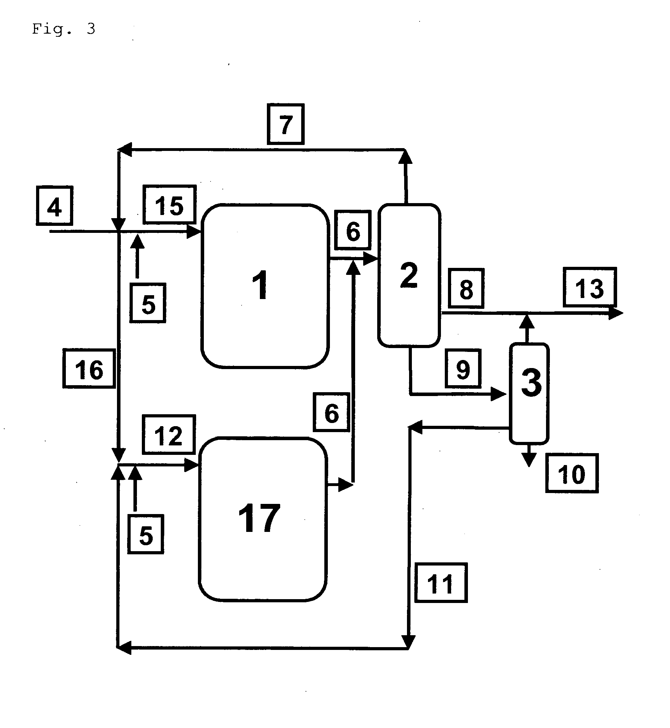

Fig. 3 zeigt schematisch eine Variante des erfindungsgemäßen Verfahrens, bei der die Rückführung der Hochsiederfraktion aus den Abgasen eines Siemensreaktors zur Erzeugung von Poysiliciumstäben in einen Wirbelschichtreaktor zur Erzeugung von Siliciumgranulat erfolgt. In einer derartigen Verfahrensvariante werden vorzugsweise 0,01 bis 3 Gew.% Hochsieder dem Reaktionsgas zugesetzt, das Reaktionsgas wird auf 300 bis 590°C erhitzt und die Granulatpartikel in dem Wirbelbettreaktor weisen bei der Umsetzung der hochsiederhaltigen Reaktionsgase eine Temperatur von 800 bis 1400°C, besonders bevorzugt von 950 bis 1050°C auf. Der besondere Vorteil dieser Variante liegt darin, dass im Abgaskondensat praktisch keine Hochsieder (>0,01 Gew%) vorliegen, so dass keine Hochsiederabtrennung erfolgen muss. Die Bezugszeichen, soweit nicht identisch mit Fig. 1 oder 2, bedeuten:
17: Reaktor zur Abscheidung von Polysiliciumgranulat, wobei der in diesem Reaktor entstehende Hochsiederanteil deutlich geringer ist als in dem Stababscheidereaktor 1.

Die folgenden Beispiele dienen der weiteren Erläuterung der Erfindung.

Beispiel 1: Rückführung der Hochsiederfraktion aus dem Kondensat eines Siemensreaktors in denselben Siemensreaktor.

Eine mit einem Siemensreaktor betriebene Polysiliciumabscheidung gemäß Stand der Technik wies im Standardbetrieb ohne Hochsiederrückführung einen Hochsiederanteil von 0,35 Gew.% im Abgaskondensat auf. Die Konzentration des Hochsiederanteils im Kondensat wurde anhand regelmäßig entnommener Proben, die mittels Gaschromatographie untersucht wurden, bestimmt. Das Kondensat wurde einer Destillationskolonne zugeführt, in der die Komponenten mit einem Siedepunkt von Trichlorsilan und darunter über Kopf abgetrennt und dem gleichen Abscheidereaktor wieder zugeführt wurden, indem sie dem Trichlorsilanfeed zugegeben wurden. Der Kolonnensumpf, bestehend aus Tetrachlorsilan und Hochsiedern, wurde einer weiteren Destillationskolonne zugeführt, in der die Hochsieder im Sumpf bis zu einem Gehalt von 50 Gew.% aufkonzentriert wurden. Auf eine weitere Aufkonzentration wurde verzichtet, um den Kolonnensumpf ohne Probleme flüssig fördern zu können. Dieser Sumpf wurde dem Chlorsilanstrom, der einen Teil des Reaktionsgases für den Abscheidereaktor bildete aus dessen Abgas die Hochsiederfraktion gewonnen wurde, in einer Menge zugegeben dass sich in diesem Chlorsilanstrom ein Hochsiederanteil und ein Tetraanteil von jeweils 0,3 Gew% einstellte. Über eine entsprechend hohe Verdampfertemperatur (400°C) wurde sichergestellt, dass alle Komponenten beim Eintritt in den Reaktor vollständig verdampft waren. Trotz dieser zusätzlichen Komponenten im Reaktionsgas der Abscheidung veränderte sich der Hochsiederanteil im Kondensat des Abgasstroms nach der Abscheidung kaum. Im Mittel wurden nun 0,37 Gew% Hochsiederanteil gemessen, wobei der Unterschied von 0,02 Gew% im Rahmen normaler Prozess- und Probenahmeschwankungen lag und daher nicht signifikant war. Die Polysiliciumausbringung aus dem Reaktor und die Polysiliciumbeschaffenheit blieben mit und ohne Rückführung des Hochsiederanteils gleich.

Beispiel 2: Rückführung der Hochsiederfraktion aus einem Siemensreaktor mit hohem Hochsiederanteil in denselben Siemensreaktor.

Aufgrund veränderter Geometrien und zusätzlicher Einbauten gegenüber dem Abscheidereaktor aus Beispiel 1 wies dieser Reaktor bei ansonsten identischen Abscheideparametern in seinem Abgaskondensat nun 3 Gew.% Hochsieder auf. Die Konzentration wurde anhand regelmäßig entnommener Proben, die mittels Gaschromatographie analog Beispiel 1 untersucht wurden, bestimmt. Wie in Beispiel 1 wurde dieses Kondensat einer Destillationskolonne zugeführt, in der die Komponenten mit einem Siedepunkt von Trichlorsilan und darunter über Kopf abgetrennt und der Abscheidung wieder zugeführt wurden. Der Kolonnensumpf, bestehend aus Tetrachlorsilan und Hochsiedern wurde einer weiteren Destillationskolonne zugeführt, in der die Hochsieder im Sumpf bis zu einem Gehalt von 50 Gew.% aufkonzentriert wurden. Auf eine weitere Aufkonzentration wurde verzichtet, um den Kolonnensumpf ohne Probleme flüssig fördern zu können. Dieser Sumpf wurde dem Chlorsilanstrom für die Abscheidung in einer Menge zugegeben, dass sich in diesem Zustrom ein Hochsiederanteil und Tetraanteil von jeweils 2,6 Gew.% einstellte. Über eine entsprechend hohe Verdampfertemperatur von 450°C wurde sichergestellt, dass alle Komponenten beim Eintritt in den Reaktor vollständig verdampft waren. Trotz dieser zusätzlichen Komponenten im Reaktionsgas der Abscheidung veränderte sich der Hochsiederanteil im Kondensat nach der Abscheidung nicht, es wurden im Mittel wieder 3 Gew.% gemessen. Die Polysiliciumausbringung aus dem Reaktor sank diesmal im Rahmen der Messgenauigkeit um 2 bis maximal 5 %, wobei die Polysiliciumbeschaffenheit gleich blieb.

Beispiel 3: Rückführung der Hochsiederfraktion aus einem Siemensreaktor mit erhöhtem Hochsiederanfall in einen Siemensreaktor mit niedrigem Hochsiederanfall

In diesem Beispiel wurde das Hochsiederkondensat aus dem Siemensreaktor gemäß Beispiel 1 dem Siemensreaktor gemäß Beispiel 1 zugegeben. In dem Chlorsilanzustrom wurde ein Hochsiederanteil und Tetraanteil von jeweils 2,2 Gew.% eingestellt. Über eine entsprechend hohe (450°C) Verdampfertemperatur wurde sichergestellt, dass alle Komponenten beim Eintritt in den Reaktor vollständig verdampft waren. Trotz dieser zusätzlichen Komponenten im Reaktionsgas der Abscheidung veränderte sich der Hochsiederanteil im Kondensat nach der Abscheidung nicht. Es wurden im Mittel 0,37 Gew.% Hochsieder im Abgaskondensat gemessen. Die Polysiliciumausbringung aus dem Reaktor und die Polysiliciumbeschaffenheit blieben mit und ohne Rückführung der Hochsiederfraktion gleich.

Beispiel 4: Rückführung der Hochsiederfraktion aus einem Siemensreaktor in einen Granulatabscheidereaktor

Das Abgaskondensat einer Granulat-Wirbelschichtabscheidung gemäß DE 102007021003 Beispiel 1 wurde auf Hochsieder untersucht. Mit konventionellem Trichlorsilanfeed (100% Trichlorsilan im Chlorsilanfeed) wies das Kondensat einen Hochsiederanteil von kleiner als 0,01 Gew.% auf. Die Konzentration wurde anhand regelmäßig entnommener Proben, die mittels Gaschromatographie untersucht wurden, bestimmt. Nun wurden dem Reaktionsgas für den Wirbelschichtreaktor die Hochsiederfraktionen (50 Gew.% Tetrachlorsilangehalt) aus Beispiel 1 bzw. Beispiel 2 mit resultierenden jeweils 0,3 bzw. 2,6 Gew.% im Chlorsilanfeed hinzugefügt. Über eine entsprechend hohe Verdampfertemperatur von 560°C wurde sichergestellt, dass alle Komponenten beim Eintritt in den Reaktor vollständig verdampft waren. Trotz dieser zusätzlichen hochsiedenden Komponenten im Reaktionsgas der Abscheidung veränderte sich der Hochsiederanteil im Kondensat nach der Abscheidung nicht messbar. Er lag weiterhin bei < 0,01 Gew.%.

## Patentansprüche

1. Verfahren zur Herstellung von polykristallinem Silicium, bei dem ein Reaktionsgas enthaltend Wasserstoff und ein siliciumhaltiges Gas in einen Reaktionsraum eingebracht werden und das siliciumhaltige Gas an erhitztem Silicium thermisch zersetzt und auf dem Silicium abgeschieden wird, wobei ein Abgas entsleht und dieses Abgas in eine erste Abgasfraktion umfassend Trichlorsilan und niedriger als Trichlorsilan siedende Chlorsilane und eine zweite Abgasfraktion umfassend höher als Trichlorsilan siedende Komponenten aufgetrennt wird und die erste Abgasfraktion dem Reaktionsgas einer Abscheidung von polykristallinem Silicium zugeführt wird und die zweite Abgasfraktion in Tetrachlorsilan und eine Hochsiederfraktion bestehend aus Hochsiedern und ggf. Tetrachlorsilan aufgetrennt wird, **dadurch gekennzeichnet, dass** die Hochsiederfraktion dem Reaktionsgas in einem Siemensreaktor zugeführt und das Reaktionsgas auf eine Temperatur von 300-590 °C erhitzt wird, wobei die Siliciumstäbe bei der Umsetzung der hochsiederhaltigen Reaktionsgase eine Temperatur von 900 bis 1413°C aufweisen.

2. Verfahren zur Herstellung von polykristallinem Silicium, bei dem ein Reaktionsgas enthaltend Wasserstoff und ein siliciumhaltiges Gas in einen Reaktionsraum eingebracht werden und das siliciumhaltige Gas an erhitztem Silicium thermisch zersetzt und auf dem Silicium abgeschieden wird, wobei ein Abgas entsteht und dieses Abgas in eine erste Abgasfraktion umfassend Trichlorsilan und niedriger als Trichlorsilan siedende Chlorsilane und eine zweite Abgasfraktion umfassend höher als Trichlorsilan siedende Komponenten aufgetrennt wird und die erste Abgasfraktion dem Reaktionsgas einer Abscheidung von polykristallinem Silicium zugeführt wird und die zweite Abgasfraktion in Tetrachlorsilan und eine Hochsiederfraktion bestehend aus Hochsiedern und ggf. Tetrachlorsilan aufgetrennt wird, **dadurch gekennzeichnet, dass** die Hochsiederfraktion dem Reaktionsgas in einem wirbelbettreaktor zugeführt und das Reaktionsgas auf eine Temperatur von 300-590 °C erhitzt wird, wobei die Granulatpartikel bei der Umsetzung der hochsiederhaltigen Reaktionsgase eine Temperatur von 800 bis 1400°C aufweisen.

3. Verfahren gemäß Anspruch 1 oder Anspruch 2, **dadurch gekennzeichnet, dass** die Hochsiederfraktion bereits vor der Zuführung zum Reaktionsgas auf eine Temperatur von 300-590 °C bei einem Druck von 1 bis 8 bar absolut erhitzt wird.

4. Verfahren gemäß Anspruch 1, 2 oder 3, **dadurch gekennzeichnet, dass** das Hochsiederkondensat einer Abscheidung mit hohem Hochsiederanfall, d.h. typischerweise > 0,3 Gew.% im Abgaskondensat der Abscheidung, dem Reaktionsgas einer Abscheidung mit niedrigerem Hochsiederanfall, d.h. typischerweise < 0,3 Gew.%, bevorzugt < 0,1 Gew.% im Abgaskondensat der Abscheidung, zugeführt wird.

5. Verfahren gemäß Anspruch 1, 3 oder 4, **dadurch gekennzeichnet, dass** die Siliciumstäbe bei der Umsetzung der hochsiederhaltigen Reaktionsgase eine Temperatur von 1100 bis 1413°C aufweisen.

6. Verfahren gemäß Anspruch 2, 3 oder 4, **dadurch gekennzeichnet, dass** in dem für die Hochsiederverwertung verwendeten Wirbelbettreaktor die Granulatpartikel bei der Umsetzung der hochsiederhaltigen Reaktionsgase eine Temperatur von von 950 bis 1050°C aufweisen.

7. Verfahren gemäß einem der Ansprüche 1 bis 6, **dadurch gekennzeichnet, dass** die Abgase mehrerer Abscheideanlagen miteinander vereinigt werden und die Hochsiederfraktion aus dem Abgas dem Reaktionsgas eines oder mehrerer Siemcnsreaktoren oder eines oder mehrerer Wirbelschichtreaktoren zugeführt wird.

8. Verfahren gemäß einem der Ansprüche 1 bis 7, **dadurch gekennzeichnet, dass** die Huchsiederfraktion aus dem Abgas eines Siemensreaktors dem Reaktionsgas einer trichlorsilanbasierten Wirbelschicht-Polysiliciumabscheidung zuge führt wird.

9. Verfahren gemäß einem der Ansprüche 1 bis 8, **dadurch gekennzeichnet, dass** dem Reaktionsgas Hochsieder aus den Abgasen bis zu 5 Gew.% zugegeben werden können.

## Claims

1. Process for preparing polycrystalline silicon, in which a reaction gas comprising hydrogen and a silicon-containing gas are introduced into a reaction chamber and the silicon-containing gas is thermally decomposed over heated silicon and is deposited on the silicon to form an offgas and this offgas is separated into a first offgas fraction comprising trichlorosilane and chlorosilanes having a lower boiling point than trichlorosilane, and a second offgas fraction comprising components having a higher boiling point than trichlorosilane, and the first offgas fraction is supplied to the reaction gas of a deposition of polycrystalline silicon, and the second offgas fraction is separated into tetrachlorosilane and a high boiler fraction consisting of high boilers, with or without tetrachlorosilane, **characterized in that** the high boiler fraction is supplied to the reaction gas in a Siemens reactor and the reaction gas is heated to a temperature of 300-590°C, and the silicon rods, in the course of conversion of the high boiler-containing reaction gases, have a temperature of from 900 to 1413°C.

2. Process for preparing polycrystalline silicon, in which a reaction gas comprising hydrogen and a silicon-containing gas are introduced into a reaction chamber and the silicon-containing gas is thermally decomposed over heated silicon and is deposited on the silicon to form an offgas and this offgas is separated into a first offgas fraction comprising trichlorosilane and chlorosilanes having a lower boiling point than trichlorosilane, and a second offgas fraction comprising components having a higher boiling point than trichlorosilane, and the first offgas fraction is supplied to the reaction gas of a deposition of polycrystalline silicon, and the second offgas fraction is separated into tetrachlorosilane and a high boiler fraction consisting of high boilers, with or without tetrachlorosilane, **characterized in that** the high boiler fraction is supplied to the reaction gas in a fluidized bed reactor and the reaction gas is heated to a temperature of 300-590°C, and the granule particles, in the course of conversion of the high boiler-containing reaction gases, have a temperature of from 800 to 1400°C.

3. Process according to Claim 1 or Claim 2, **characterized in that** the high boiler fraction is heated before being supplied to the reaction gas to a temperature of 300-590°C at a pressure of from 1 to 8 bar absolute.

4. Process according to Claim 1, 2 or 3, **characterized in that** the high boiler condensate of a deposition with a high level of high boilers, i.e. typically > 0.3% by weight in the offgas condensate of the deposition, is supplied to the reaction gas of a deposition with a lower level of high boilers, i.e. typically < 0.3% by weight, preferably < 0.1% by weight, in the offgas condensate of the deposition.

5. Process according to Claim 1, 3 or 4, **characterized in that** the silicon rods, in the course of conversion of the high boiler-containing reaction gases, have a temperature of from 1100 to 1413°C.

6. Process according to Claim 2, 3 or 4, **characterized in that** the granule particles in the fluidized bed reactor used for the high boiler utilization, in the course of conversion of the high boiler-containing reaction gases, have a temperature of from 950 to 1050°C.

7. Process according to any one of Claims 1 to 6, **characterized in that** the offgases of a plurality of deposition plants are combined with one another and the high boiler fraction from the offgas is supplied to the reaction gas of one or more Siemens reactors or of one or more fluidized bed reactors.

8. Process according to any one of Claims 1 to 7, **characterized in that** the high boiler fraction from the offgas of a Siemens reactor is supplied to the reaction gas of a trichlorosilane-based fluidized bed polysilicon deposition.

9. Process according to any one of Claims 1 to 8, **characterized in that** high boilers from the offgases can be added to the reaction gas at up to 5% by weight.

## Revendications

1. Procédé pour la production de silicium polycristallin, dans lequel on introduit dans une chambre de réaction un gaz de réaction contenant de l'hydrogène et un gaz contenant du silicium et le gaz contenant du silicium est décomposé thermiquement sur du silicium chauffé et est déposé sur le silicium, de sorte qu'il en résulte un gaz rejeté et ce gaz rejeté est fractionné en une première fraction de gaz rejeté comprenant du trichlorosilane et des chlorosilanes à plus bas point d'ébullition que le trichlorosilane et en une deuxième fraction de gaz rejeté comprenant des composants à plus haut point d'ébullition que le trichlorosilane et on envoie la première fraction de gaz rejeté au gaz de réaction d'un dépôt de silicium polycristallin et on fractionne la deuxième fraction de gaz rejeté en tétrachlorosilane et en une fraction contenant des composés à haut point d'ébullition, consistant en des composés à haut point d'ébullition et éventuellement du tétrachlorosilane, **caractérisé en ce qu'**on envoie la fraction contenant des composés à haut point d'ébullition au gaz de réaction dans un réacteur Siemens et on chauffe le gaz de réaction à une température de 300-590 °C, les barres de silicium présentant une température de 900 à 1 413 °C lors de la réaction des gaz de réaction contenant des composés à haut point d'ébullition.

2. Procédé pour la production de silicium polycristallin, dans lequel on introduit dans une chambre de réaction un gaz de réaction contenant de l'hydrogène et un gaz contenant du silicium et le gaz contenant du silicium est décomposé thermiquement sur du silicium chauffé et est déposé sur le silicium, de sorte qu'il en résulte un gaz rejeté et ce gaz rejeté est fractionné en une première fraction de gaz rejeté comprenant du trichlorosilane et des chlorosilanes à plus bas point d'ébullition que le trichlorosilane et en une deuxième fraction de gaz rejeté comprenant des composants à plus haut point d'ébullition que le trichlorosilane et on envoie la première fraction de gaz rejeté au gaz de réaction d'un dépôt de silicium polycristallin et on fractionne la deuxième fraction de gaz rejeté en tétrachlorosilane et en une fraction contenant des composés à haut point d'ébullition, consistant en des composés à haut point d'ébullition et éventuellement du tétrachlorosilane, **caractérisé en ce qu'**on envoie la fraction contenant des composés à haut point d'ébullition au gaz de réaction dans un réacteur à lit tourbillonnaire et on chauffe le gaz de réaction à une température de 300-590 °C, les particules de granulé présentant une température de 800 à 1 400 °C lors de la réaction des gaz de réaction contenant des composés à haut point d'ébullition.

3. Procédé selon la revendication 1 ou la revendication 2, **caractérisé en ce que** déjà avant l'envoi au gaz de réaction on chauffe à une température de 300-590 °C, sous une pression absolue de 1 à 8 bars, la fraction contenant des composés à haut point d'ébullition.

4. Procédé selon la revendication 1, 2 ou 3, **caractérisé en ce qu'**on envoie le condensat de composés à haut point d'ébullition d'un dépôt à forte production de composés à haut point d'ébullition, à savoir caractéristiquement > 0,3 % en poids dans le condensat de gaz rejeté du dépôt, au gaz de réaction d'un dépôt à faible production de composés à haut point d'ébullition, à savoir caractéristiquement < 0,3 % en poids, de préférence < 0,1 % en poids dans le condensat de gaz rejeté du dépôt.

5. Procédé selon la revendication 1, 3 ou 4, **caractérisé en ce que** lors de la réaction des gaz de réaction contenant des composés à haut point d'ébullition, les barres de silicium présentent une température de 1 100 à 1 413 °C.

6. Procédé selon la revendication 2, 3 ou 4, **caractérisé en ce que** dans le réacteur à lit tourbillonnaire utilisé pour la mise à profit des composés à haut point d'ébullition, les particules de granulé présentent lors de la réaction des gaz de réaction contenant des composés à haut point d'ébullition une température de 950 à 1 050 °C.

7. Procédé selon l'une quelconque des revendications 1 à 6, **caractérisé en ce qu'**on réunit entre eux les gaz rejetés de plusieurs unités de dépôt et on envoie la fraction contenant des composés à haut point d'ébullition, provenant du gaz rejeté, au gaz de réaction d'un ou plusieurs réacteurs Siemens ou d'un ou plusieurs réacteurs à lit tourbillonnaire.

8. Procédé selon l'une quelconque des revendications 1 à 7, **caractérisé en ce qu'**on envoie la fraction contenant des composés à haut point d'ébullition, provenant du gaz rejeté d'un réacteur Siemens, au gaz de réaction d'un dépôt de polysilicium en lit tourbillonnaire à base de trichlorosilane.

9. Procédé selon l'une quelconque des revendications 1 à 8, **caractérisé en ce qu'**il est possible d'ajouter au gaz de réaction jusqu'à 5 % en poids de composés à haut point d'ébullition provenant des gaz rejetés.
